# FASCICULE DE BREVET EUROPEEN

(11) **EP 3 145 861 B1**
(45) Date de publication et mention de la délivrance du brevet: **25.07.2018**
(21) Numéro de dépôt: 15706818.0
(22) Date de dépôt: 27.02.2015
(51) Int. Cl.: C01B 32/174

(54) **PROCÉDÉ DE PRÉPARATION D'UNE SUSPENSION CONTENANT DES NANOTUBES DE CARBONE ET SUSPENSION STABLE AINSI OBTENUE**
VERFAHREN ZUR HERSTELLUNG EINER SUSPENSION MIT KOHLENSTOFFNANORÖHRCHEN UND AUF DIESE WEISE ERHALTENE STABILE SUSPENSION
METHOD FOR PREPARING A SUSPENSION CONTAINING CARBON NANOTUBES AND STABLE SUSPENSION OBTAINED IN THIS WAY

(30) Priorité: 28.02.2014 FR 1451656
(43) Date de publication de la demande: 29.03.2017
(73) Titulaire: Commissariat à l'Énergie Atomique et aux Énergies Alternatives, 75015 Paris (FR)
(72) Inventeur: DEBSKI, Nicolas, 91120 Palaiseau (FR); MAYNE-L'HERMITE, Martine, 91470 Les Molieres (FR); PINAULT, Mathieu, 94260 Fresnes (FR)
(74) Mandataire: Brevalex
(86) Numéro de dépôt international: PCT/EP2015/054123
(87) Numéro de publication internationale: WO 2015/128457

(56) Documents cités:
- WO-A1-2006/062785
- WO-A2-2007/080323
- US-A1- 2011 301 251
- YU ET AL: "Controlling the dispersion of multi-wall carbon nanotubes in aqueous surfactant solution", CARBON, ELSEVIER, OXFORD, GB, vol. 45, no. 3, 26 janvier 2007 (2007-01-26), pages 618-623, XP005862745, ISSN: 0008-6223, DOI: 10.1016/J.CARBON.2006.10.010
- GARG P ET AL: "An experimental study on the effect of ultrasonication on viscosity and heat transfer performance of multi-wall carbon nanotube-based aqueous nanofluids", INTERNATIONAL JOURNAL OF HEAT AND MASS TRANSFER, PERGAMON PRESS, GB, vol. 52, no. 21-22, 1 octobre 2009 (2009-10-01), pages 5090-5101, XP026495117, ISSN: 0017-9310, DOI: 10.1016/J.IJHEATMASSTRANSFER.2009.04.029 [extrait le 2009-06-17]

## Description

### DOMAINE TECHNIQUE

La présente invention appartient au domaine des nanotechnologies et, plus particulièrement, au domaine des nano-objets tels que des nanotubes de carbone.

La présente invention propose un procédé permettant de préparer une suspension stable de nano-objets telle qu'une suspension stable de nanotubes de carbone et, plus particulièrement, une suspension stable de nanotubes de carbone longs pouvant atteindre jusqu'à plusieurs micromètres et ce dans des milieux liquides aqueux.

La présente invention concerne également les suspensions obtenues par la mise en oeuvre du procédé selon la présente invention.

### ÉTAT DE LA TECHNIQUE ANTÉRIEURE

Les nanotubes de carbone (NTC) présentent des propriétés électriques, mécaniques et thermiques exceptionnelles. Une des pistes privilégiées pour l'emploi de ces nanomatériaux est de réaliser des composites dont l'élaboration passe par la réalisation de suspensions de nanotubes de carbone. Ces composites peuvent se présenter sous différentes formes (matériaux massifs, fibres, ...) et présentent un grand intérêt dans l'industrie car, pour des taux de charges relativement faibles (de l'ordre du pourcent massique), une amélioration des propriétés électriques et mécaniques est observée par rapport à la matrice polymère seul. Par ailleurs les propriétés finales de ces composites sont non seulement liées à ce taux de charge mais également à la longueur des NTC dans le composite.

L'élaboration de ces composites passe par la mise en oeuvre d'une suspension de NTC stable et homogène. Cependant, cette mise en oeuvre est assez délicate car les nanotubes sont des particules hydrophobes, liées entre elles par des interactions majoritairement de type Van der Waals, ce qui limite leur dispersion dans la plupart des solvants polaires.

Pour arriver à une suspension stable et homogène de NTC, il est possible de rajouter un tensioactif au solvant pour modifier l'énergie de surface des NTC mais aussi d'employer une source d'énergie extérieure pour les désagglomérer. Cet apport d'énergie se fait en général par l'utilisation d'ultrasons à l'aide d'un bac ou d'une sonde. Les ultrasons ont l'avantage de très bien disperser les NTC mais d'engendrer également une diminution drastique de leur longueur comme le montre Hilding *et al* **[1].** Dans la page 17, la Figure 14 montrant l'évolution de la longueur des NTC en fonction de la durée d'application d'ultrasons dans une solution de toluène met en évidence que la longueur initiale est divisée par un facteur 5 après 5 min d'ultrasons.

C'est pourquoi, un certain nombre de groupes se sont tournés vers la combinaison de plusieurs techniques de dispersion afin de limiter cette diminution drastique de la longueur des NTC. L'idée principale est de pré-disperser les NTC pour réduire la taille des agglomérats et d'achever la dispersion avec les ultrasons ou une autre technique.

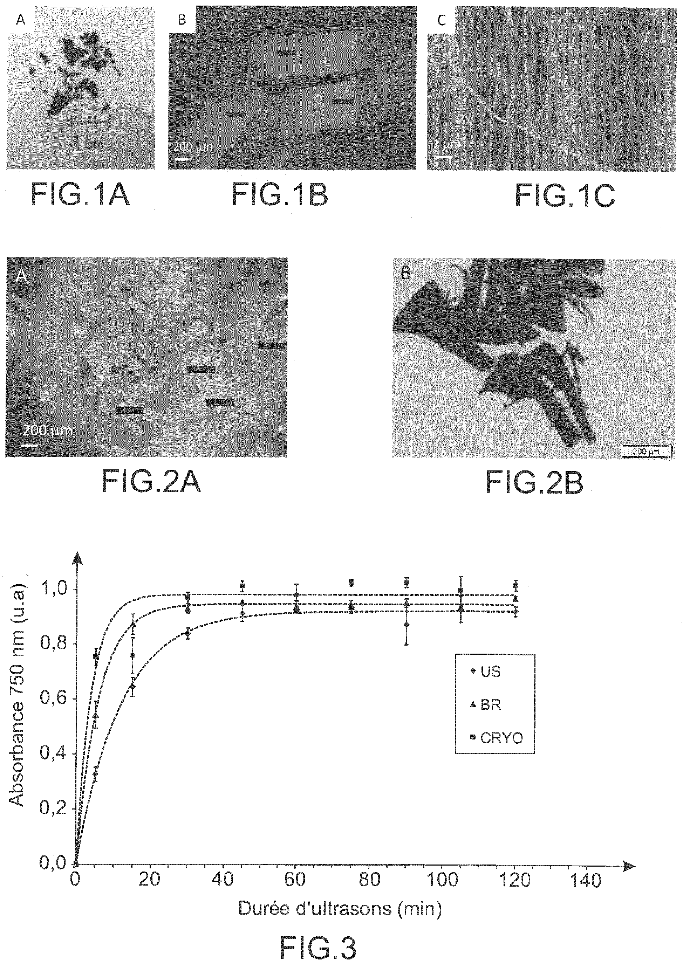

Changyu *et al* ont réalisé des suspensions en pré-dispersant les NTC par broyage en milieu humide dans une solution d'eau contenant de l'acide acétique et un polyoside i.e. du chitosan, puis la suspension est soumise aux ultrasons à l'aide d'un bac **[2].** La Figure 2 de la page 192 représente l'absorbance de la suspension en fonction de la longueur d'onde et montre clairement une augmentation de cette absorbance et donc de la qualité de la dispersion. Ils mettent ainsi en avant l'utilisation d'une pré-dispersion pour une concentration en NTC de 0,4 mg/ml, mais ils ne fournissent pas d'informations précises sur la longueur des NTC dans la dispersion, ni sur la stabilité de cette dernière.

Krause *et al* ont étudié l'influence d'un broyage à sec à l'aide un broyeur planaire avant l'utilisation d'ultrasons **[3]**. Pour cela, ils ont utilisé différents types de NTC, broyés pendant différentes durées, qu'ils ont mis, à une concentration de 0,07 mg/ml, dans une solution aqueuse contenant du dodecylbenzènesulfonate de sodium (SDBS) en tant que tensioactif. Les ultrasons sont appliqués à l'aide d'une sonde. La suspension obtenue avec des NTC bruts nécessite des durées de traitement aux ultrasons moins importantes comparées aux NTC broyés et ce pour arriver à un état de dispersion totale. Il semblerait que le broyage crée un effet de compactage qui serait défavorable à une bonne dispersibilité des NTC. Cependant les auteurs ne fournissent que la distribution de la longueur des NTC avant et après broyage, où le décile 90 passe de 3,3 µm à 1 µm pour une valeur moyenne inférieure au µm. Concernant la stabilité dans le temps, aucune information n'est communiquée dans cet article.

La demande internationale WO 2010/106287 propose un procédé de dispersion des NTC en utilisant deux agitations physiques avec une première phase de broyage à bille en milieu humide suivie d'une phase de dispersion par ultrasons **[4].** Le milieu liquide utilisé dans ce document comprend une matrice liquide et un agent de dispersion de type polymère comme du carboxy méthyl cellulose de sodium. Les clichés obtenus par microscopie optique de la suspension montrent une amélioration de l'état de dispersion et une diminution de la taille des agglomérats. Il en va de même avec les analyses UV-visible qui montrent une diminution de l'intensité transmise donc une augmentation de l'absorbance de la solution qui se traduit par un meilleur état de dispersion. Cependant aucune information n'est donnée concernant la longueur des NTC en suspension et la stabilité. Par ailleurs, ce document revendique un taux de charge en NTC pouvant aller de 0,1% à 3% en masse dans le milieu liquide.

La demande de brevet US 2010/0330358 reporte un procédé de dispersion de NTC qui consiste dans un premier temps à agiter un mélange NTC + solvant alcoolique + une résine polyvinyl acétal suivi d'une phase de traitement aux ultrasons **[5].** La suspension ainsi obtenue est totalement dispersée, stable sur une période de 2 semaines et contient des NTC de longueur supérieure à 1 µm. Le brevet revendique une concentration en NTC comprise entre 0,005 mg/ml et 10 mg/ml et notamment entre 0,005 mg/ml et 2 mg/ml, ainsi qu'une longueur en solution supérieure ou égale à 1 µm.

La demande internationale WO 2009/063008 propose un procédé de préparation d'un film polymère contenant et renforcé par des NTC **[6].** Le procédé décrit implique une phase de dispersion qui peut être réalisée par ultrasons, agitation à grande vitesse ou une combinaison des deux. Le milieu est constitué d'eau et d'un polymère hydrosoluble ou d'eau et d'un tensioactif hydrosoluble. L'état de dispersion est estimé par analyses UV-visible et correspond au moment où l'absorbance a atteint un maximum. Les longueurs des NTC en suspension ne dépassent pas 2 à 3 µm pour un rapport d'aspect (longueur NTC/diamètre externe NTC) inférieur à 300. L'exemple particulier décrit dans ce document met en oeuvre des NTC à une concentration de 0,04 mg/ml dans une solution aqueuse contenant du dodécylsulfate de sodium (SDS). Par ailleurs, aucune information n'est donnée sur la stabilité dans le temps de ces suspensions.

Le brevet US 8,324,487 propose un procédé pour préparer des NTC traités avec un tensioactif i.e. revêtus de tensioactif et secs qui peuvent être redispersés dans des solvants aqueux ou organiques de façon à produire extemporanément des dispersions stables **[7].** Ce procédé comprend une 1^{ère} étape de dispersion suivie d'une 2^{nde} étape de séchage. La 1^{ère} étape consiste à disperser par ultrasons des NTC présents dans une solution aqueuse contenant un tensioactif puis à soumettre la solution à une agitation magnétique et enfin à une centrifugation, afin de séparer, par décantation, les agglomérats restants du surnageant. Ce document reporte un exemple d'une suspension réalisée avec 1 mg/ml de NTC. Après centrifugation, la suspension (i.e. le surnageant) est homogène et stable sur une période de 3 à 6 mois (exemple 1). L'étape de séchage consiste à lyophiliser la suspension par immersion dans l'azote liquide (ce qui a pour effet de geler la suspension) puis sublimation de l'eau afin d'obtenir une poudre de NTC recouverte de tensioactif. Le brevet ne mentionne pas d'information sur la longueur des NTC en suspension.

Enfin, Xu *et al* décrivent une méthode de dispersion composée de deux phases d'agitation à haute vitesse pour obtenir des NTC longs en suspension **[8].** Les tubes utilisés sont des tapis verticalement alignés synthétisés par CVD catalytique à partir d'une solution de ferrocène/cyclohexane et possèdent une longueur de 5 mm et un diamètre compris entre 30 et 60 nm. Ces NTC sont pré-dispersés à sec à l'aide d'un mixeur à haute vitesse (24000 rpm) pendant 60 à 600 s. La poudre ainsi obtenue est mise en suspension dans l'alcool benzénique à hauteur de 0,004 mg/ml. La suspension est ensuite agitée à une vitesse de 6000 à 7000 rpm. Afin de comparer cette méthode à d'autres voies de dispersion plus classiques, la deuxième phase d'agitation est remplacée soit par des ultrasons, soit par un broyage en milieu humide à l'aide d'un mortier. Les trois voies d'élaboration permettent d'avoir une suspension dispersée sans agglomérats. Cependant, avec l'agitation à grande vitesse, la longueur moyenne des NTC en suspension est de 38,5 ± 19,3 µm contre 31,4 ± 20,1 µm pour la voie employant des ultrasons et 1,51 ± 0,79 µm pour la voie employant le broyage. Ces résultats montrent que le broyage est une technique destructive pour les NTC, ce qui est confirmé par des analyses par spectroscopie Raman montrant que le rapport de l'intensité du pic D sur le pic G (rapport I_{D}/I_{G}) augmente de 0,647 à 0,911 alors qu'il reste quasi le même pour les deux autres techniques. Les suspensions sont stables environ 3h30 avant apparition d'agglomérats.

En conclusion, l'emploi d'une phase de pré-dispersion permet d'obtenir au final des suspensions au sein desquelles les nanotubes sont mieux individualisés conduisant à un meilleur état de dispersion de ces objets dans le milieu liquide. De plus, le broyage mécanique est souvent utilisé au cours de la phase de pré-dispersion pour réduire la taille des agglomérats, alors que cette technique crée beaucoup de défaut sur les NTC et semble rendre la dispersion des NTC plus difficile. Enfin une seule équipe **[8]** a obtenu des tubes d'une longueur supérieure à 5 µm en solution mais avec une concentration extrêmement faible (0,004 mg/ml), qui est rarement compatible avec la fabrication de matériaux composite.

Il existe donc un réel besoin d'un procédé permettant d'individualiser les nanotubes sans induire leur rupture ou sans affecter leurs propriétés lors de l'étape de dispersion. En effet, disposer de nanotubes longs en suspension stable contenant des concentrations élevées en nanotubes ouvre la voie vers l'élaboration de différents types de nanomatériaux composites dans lesquels la longueur des nanotubes pourrait être mise à profit à la fois pour les propriétés mécaniques, électriques et thermiques de ces matériaux.

### EXPOSÉ DE L'INVENTION

L'objet de la présente invention est de proposer un procédé fonctionnel qui réponde, entre autres, aux besoins indiqués ci-dessus c'est-à-dire un procédé permettant de maintenir en suspension, dans un milieu liquide notamment aqueux, des nanotubes de carbone longs présents dans des quantités intéressantes en vue de l'utilisation ultérieure de la suspension.

De plus, le procédé de la présente invention est remarquable car il s'applique non seulement aux nanotubes longs et notamment aux nanotubes longs se présentant sous forme d'un tapis mais aussi à tout type de nanotubes enchevêtrés ou alignés quel que soit leur procédé de préparation et leur longueur.

Le procédé de la présente invention se caractérise en particulier par la mise en oeuvre d'une phase de pré-dispersion par dissipation d'une énergie mécanique interne au système lui-même, générée par congélation/décongélation, i.e. par la dilatation volumique de la glace et les contraintes mécaniques locales qui peuvent en résulter suite au retour à l'état liquide, ce qui permet de limiter l'utilisation d'une source extérieure d'énergie mécanique, telle que ultrasons ou broyage (pour ne citer que les moyens de dispersion les plus conventionnels), nécessaire à la dispersion de nano-objets hydrophobes, tels que les nanotubes de carbone, dans un liquide hydrophile afin d'éviter la rupture des nanotubes. Ainsi grâce à l'étape de pré-dispersion, l'invention permet de réduire la durée d'exposition aux ultrasons en tirant parti de leur efficacité pour homogénéiser le milieu tout en minimisant la rupture des tubes. L'invention permet d'obtenir une suspension stable en réduisant le temps d'exposition aux ultrasons de 20 à 40% par rapport aux méthodes conventionnelles.

Par « suspension stable » ou « dispersion stable », on entend dans le cadre de la présente invention une suspension ou dispersion dans laquelle les nanotubes ne sédimentent pas ou peu à l'oeil et restent en suspension pendant au moins 24 heures, pendant au moins 7 jours, pendant au moins un mois voire pendant au moins six mois.

La présente invention concerne ainsi un procédé de préparation d'une suspension de nanotubes de carbone dans une solution aqueuse comprenant les étapes successives suivantes consistant à :
a) mettre en contact, sans agitation mécanique et sans traitement aux ultrasons, des nanotubes de carbone avec une solution aqueuse contenant au moins un agent de dispersion ;
b) soumettre, sans agitation mécanique et sans traitement aux ultrasons, la solution aqueuse contenant des nanotubes de carbone et un agent de dispersion obtenue suite à l'étape (a) à au moins un cycle de congélation dans l'azote liquide et de décongélation ;
c) soumettre la solution décongelée obtenue suite à l'étape (b) à un traitement aux ultrasons.

Avantageusement, la solution aqueuse dans laquelle les nanotubes de carbone sont dispersés conformément au procédé de la présente invention et donc la solution aqueuse mise en oeuvre lors de l'étape (a) du procédé selon l'invention contient, en tant que solvant, de l'eau et éventuellement un autre solvant protique.

Par « eau », on entend, dans le cadre de la présente invention, aussi bien l'eau du robinet, l'eau désionisée, l'eau distillée que l'eau ultra-pure (18,2 MΩ), toutes ces eaux pouvant éventuellement être acidifiées ou basiques.

Par « solvant protique », on entend, dans le cadre de la présente invention, un solvant qui comporte au moins un atome d'hydrogène susceptible d'être libéré sous forme de proton. Le solvant protique éventuellement utilisé dans le cadre de la présente invention est différent de l'eau. Ainsi, le solvant protique est avantageusement choisi dans le groupe constitué par l'acide acétique, les solvants hydroxylés comme, par exemple, le méthanol et l'éthanol, les glycols liquides de faible poids moléculaire tels que l'éthylèneglycol, et leurs mélanges.

Dans une première variante, le solvant utilisé dans le cadre de la présente invention n'est constitué que d'eau telle que précédemment définie.

Dans une seconde variante, le solvant utilisé dans le cadre de la présente invention est constitué d'un mélange d'eau et d'au moins un autre solvant protique tel que précédemment défini. Un mélange plus particulièrement utilisé est un mélange d'eau et d'au moins un solvant hydroxylé comme le méthanol et l'éthanol. Avantageusement, lorsque le solvant utilisé est un mélange d'eau et d'au moins un autre solvant protique, la quantité d'eau dans le mélange est d'au moins 50% exprimé en volume par rapport au volume total du mélange.

La solution aqueuse dans laquelle les nanotubes de carbone sont dispersés conformément au procédé de la présente invention et donc la solution aqueuse mise en oeuvre lors de l'étape (a) du procédé selon l'invention contient au moins un agent de dispersion.

Par « agent de dispersion », on entend une molécule permettant de conserver les nanotubes de manière individualisés par encombrement stérique autour des nanotubes. Avantageusement, un tel agent de dispersion est choisi dans le groupe constitué par les polymères dispersants et les tensioactifs.

Avantageusement, un polymère dispersant est choisi dans le groupe constitué par les homopolymères hydrosolubles, les copolymères aléatoires hydrosolubles, les copolymères séquencés hydrosolubles, les polymères greffés hydrosolubles, en particulier, les alcools polyvinyliques, les copolymères d'alcools polyvinyliques et d'acétates polyvinyliques, polyvinylpyrrolidone, les dérivés de cellulose tels que, par exemple, la carboxyméthylcellulose, la carboxypropylcellulose, la carboxyméthylpropylcellulose, l'hydroxyéthylcellulose, l'amidon, la gélatine, les dérivés de gélatine, les polymères d'acides aminés, les polylysines, les poly(acide aspartiques), les polyacrylates, les polyéthylène sulfonates, les polystyrène sulfonates, les polyméthacrylates, les acides polysulfoniques, les produits de condensation d'acides sulfoniques aromatiques avec la formaldéhyde, les naphthalène sulfonates, les lignine sulfonates, les copolymères de monomères acryliques, les polyéthylèneimines, les polyvinylamines, les polyallylamines, les poly(2-vinylpyridines), les copolyéthers séquencés, les copolyéthers séquencés avec les polystyrènes séquencés, et le chlorure de polydiallyldiméthylammonium.

Par « tensioactif », on entend une molécule comportant une partie lipophile (apolaire) et une partie hydrophile (polaire). Avantageusement, ledit au moins un tensioactif présent dans la solution aqueuse lors de l'étape (a) du procédé de l'invention est choisi parmi les tensioactifs anioniques, les tensioactifs cationiques, les tensioactifs zwittérioniques, les tensioactifs amphotères et les tensioactifs non-ioniques. La solution aqueuse mise en oeuvre lors de l'étape (a) du procédé peut comprendre plusieurs tensioactifs appartenant à une même famille de tensioactifs précédemment listée (i.e. anionique, cationique, zwittérionique, amphotère ou non ionique) ou plusieurs tensioactifs appartenant à au moins deux de ces familles de tensioactifs distinctes.

Pour rappel, les tensioactifs anioniques sont des tensioactifs dont la partie hydrophile est chargée négativement tels que les alkyle ou aryle sulfonates, sulfates, phosphates, ou sulfosuccinates associés à un contre ion comme un ion ammonium (NH₄⁺), un ammonium quaternaire tel que tétrabutylammonium, et les cations alcalins tels que Na⁺, Li⁺ et K⁺.

A titre de tensioactifs anioniques, il est, par exemple, possible d'utiliser le paratoluènesulfonate de tetraéthylammonium, le dodécylsulfate de sodium, le palmitate de sodium, le stéarate de sodium, le cholate de sodium, le désoxycholate de sodium, un mélange de cholate de sodium et de désoxycholate de sodium (également connu sous le nom « sel de bile »), le myristate de sodium, le di(2-éthylhexyl) sulfosuccinate de sodium, le méthylbenzène sulfonate et l'éthylbenzène sulfonate.

Les tensioactifs cationiques sont des tensioactifs dont la partie hydrophile est chargée positivement, notamment choisis parmi les ammoniums quaternaires comportant au moins une chaîne aliphatique en C₄-C₂₂ associés à un contre ion anionique choisi notamment parmi les dérivés du bore tels que le tétrafluoroborate ou les ions halogénures tels que F⁻, Br⁻, I⁻ ou Cl⁻. A titre de tensioactifs cationiques, il est, par exemple, possible d'employer le chlorure tétrabutyl-ammonium, le chlorure tetradécyl-ammonium, le bromure de tetradécyl-triméthyl-ammonium (TTAB), le bromure de cétyl-triméthyl-ammonium (CTAB), le bromure d'octadecyl-triméthyl-ammonium, le bromure de hexadecyl-triméthyl-ammonium, les halogénures d'alkylpyridinium portant une chaîne aliphatique et les halogénures d'alkylammonium.

Les tensioactifs zwittérioniques sont des composés neutres possédant des charges électriques formelles d'une unité et de signe opposés, notamment choisis parmi les composés présentant une chaîne alkyle en C₅-C₂₀ substituée généralement par une fonction chargée négativement comme un sulfate ou un carboxylate et une fonction chargée positivement comme un ammonium. A titre de tensioactifs zwittérioniques, on peut citer le N, N diméthyl-dodécyl-ammoniumbutanate de sodium, le diméthyl-dodécyl-ammonium propanate de sodium et les acides aminés.

Les tensioactifs amphotères sont des composés se comportant à la fois comme un acide ou comme une base selon le milieu dans lequel ils sont placés. A titre de tensioactifs amphotères, il est possible d'utiliser le lauroamphodiacétate de disodium et les bétaïnes comme l'alkylamidopropylbétaïne ou la laurylhydroxysulfobétaïne.

Les tensioactifs non ioniques, également connus sous le nom de tensioactifs neutres, sont des tensioactifs qui ne présentent aucun groupe apte à être ionisé dans l'eau à un pH neutre ou proche de la neutralité. De tels tensioactifs sont cependant amphipathiques puisque contenant des entités lipophiles et des entités hydrophiles. Les propriétés tensioactives des tensioactifs non ioniques, notamment l'hydrophilie, sont apportées par des groupements fonctionnels non chargés tels qu'un alcool, un éther, un ester, une cétone ou encore un amide, contenant des hétéroatomes tels qu'un atome d'azote ou un atome d'oxygène. En raison de la faible contribution hydrophile de ces fonctions, les composés tensioactifs non ioniques sont le plus souvent polyfonctionnels. Tout tensioactif non ionique connu de l'homme du métier est utilisable dans le cadre de la présente invention.

Avantageusement, un tensioactif non ionique utilisable dans le cadre de la présente invention est choisi parmi les alcoxylates d'alkyles ; les alcoxylates d'alcools gras ; les alcoxylates d'amines grasses ; les alcoxylates d'acides gras ; les alcoxylates d'oxoalcools ; les alcoxylates d'alkylphénols ; les éthoxylates d'alkyles ; les éthoxylates d'alcools gras ; les éthoxylates d'amines grasses ; les éthoxylates d'acides gras ; les éthoxylates d'oxoalcools ; les éthoxylates d'alkylphénols comme, par exemple, les éthoxylates d'octylphénol et de nonylphénol ; les alcools, les α-diols, les alkylphénols polyéthoxylés et poly-propoxylés ayant une chaîne grasse comportant, par exemple, de 8 à 18 atomes de carbone, le nombre de groupes oxydes d'éthylène ou oxydes de propylène pouvant être notamment de 2 à 50 ; les polymères complexes d'oxydes de polyéthylène et de polypropylène ; les copolymères d'oxyde d'éthylène et de propylène ; les copolymères blocs d'oxydes de polyéthylène et de polypropylène comme, par exemple, les copolymères triblocs POE-POP-POE ; les condensats d'oxyde d'éthylène et de propylène sur des alcools gras ; les amides gras polyéthoxylés ayant, de préférence, de 2 à 30 moles d'oxyde d'éthylène ; les éthers polyéthoxylés ayant, de préférence, de 2 à 30 moles d'oxyde d'éthylène comme, par exemple, le stéaryl éther de polyoxyéthylène (20) (Brij®S20), le polyéthylène glycol tert-octylphényl éther (Triton X-100®), le lauryléther de polyéthylèneglycol (POE23 ou Brij®35) et le décaéthylène glycol monododécyl éther (C12E10®) ; les monoesters (monolaurate, monomyristate, monostéarate, monopalmitate, monooléate, etc.) et polyesters d'acides gras et du glycérol ; les amides gras polyglycérolés comportant en moyenne de 1 à 5 et, plus spécialement, de 1,5 à 4 groupes glycérol ; les esters d'acide gras du sorbitan oxyéthylénés comportant de 2 à 30 moles d'oxyde d'éthylène ; les monoesters (monolaurate, monomyristate, monostéarate, monopalmitate, monooléate, etc.) et polyesters d'acides gras et du sorbitane, les monoesters de polyoxyéthylène sorbitane ; les esters d'acides gras du sucrose ; les esters d'acides gras du polyéthylèneglycol ; les alkylpolyglycosides ; les dérivés de N-alkyl glucamine et les oxydes d'amines tels que les oxydes d'alkyl(C10-C14) amines ou les oxydes de N-acylaminopropylmorpholine ; les polyols (tensioactifs dérivés de sucres) en particulier les alkylates de glucose tels que par exemple l'hexanate de glucose ; les tensioactifs dérivant de glucoside (laurate de sorbitol) ou de polyols tels que les éthers d'alcools glycérolés ; les alcanolamides et leurs mélanges.

Dans le cadre de la présente invention, le (ou les) tensioactif(s) mis en oeuvre sont avantageusement choisi(s) parmi les tensioactifs non ioniques et les tensioactifs anioniques tels que précédemment définis.

La concentration en agent de dispersion, notamment en polymères dispersants ou en tensioactifs et, en particulier, en tensioactifs non ioniques et/ou en tensioactifs anioniques dans la solution aqueuse est avantageusement comprise entre 1 g/l et 100 g/l de solution aqueuse (i.e. entre 0,1% et 10% en masse) et notamment entre 2 g/l et 50 g/l de solution aqueuse (i.e. entre 0,2% et 5% en masse).

La présente invention s'applique à tout type de nanotubes de carbone et ce quel que soit leur procédé de préparation. Ainsi, les nanotubes de carbone mis en oeuvre dans le cadre de la présente invention peuvent être des nanotubes à une seule couche de graphène (SWNT), des nanotubes à plusieurs couches de graphène (MWNT) ou un mélange de nanotubes SWNT et de nanotubes MWNT.

L'homme du métier connaît différentes techniques permettant de préparer de tels nanotubes de carbone. A titre d'exemples, on peut citer les procédés physiques basés sur la sublimation du carbone tels que des méthodes d'arc électrique, d'ablation laser ou utilisant un four solaire et les procédés chimiques consistant à pyrolyser des sources carbonées sur des catalyseurs métalliques et s'apparentant au procédé de dépôt chimique en phase vapeur (CVD) tels que notamment le procédé de dépôt chimique en phase vapeur, catalytique, assisté par aérosol (CCVD) décrit par Castro *et al* **[9].** De même, Hilding *et al* décrivent différentes techniques utilisables pour préparer des nanotubes de carbone **[1].**

Avantageusement, les nanotubes mis en oeuvre dans le cadre de la présente invention sont des nanotubes de carbone à plusieurs couches de graphène et, de préférence, des nanotubes de carbone à plusieurs couches de graphène présentant une longueur moyenne comprise entre 10 nm et 10000 µm, notamment entre 20 nm et 8000 µm, en particulier entre 50 nm et 6000 µm et, tout particulièrement, entre 100 nm et 5000 µm.

Dans une forme de mise en oeuvre particulière, les nanotubes mis en oeuvre dans le cadre de la présente invention sont des nanotubes de carbone à plusieurs couches de graphène, ayant des diamètres externes moyens compris entre 5 et 100 nm et des longueurs moyennes comprises entre 10 et 10000 µm, notamment entre 40 et 9000 µm, en particulier, entre 60 et 8000 µm et, plus particulièrement, entre 100 et 1000 µm. Dans cette forme de mise en oeuvre particulière, les nanotubes de carbone sont avantageusement alignés.

Les nanotubes de carbone peuvent être utilisés bruts, i.e. contenant des impuretés métalliques, typiquement du fer, dans une gamme de 2 à 10% en masse par rapport à la masse totale des nanotubes, mais également purifiés par traitement thermique, notamment sous atmosphère neutre à haute température typiquement 2000°C, i.e. présentant une meilleure graphitisation et l'absence d'impuretés métalliques. Ils peuvent être également purifiés par traitement chimique (acide, dichlore, ...), permettant ainsi l'élimination du fer, mais générant des défauts en surface.

Les nanotubes de carbone sont présents, dans la solution aqueuse, en une quantité avantageusement comprise entre 0,1 g/l et 200 g/l de solution aqueuse (i.e. entre 0,01% et 20% en masse), notamment entre 0,5 g/l et 100 g/l de solution aqueuse (i.e. entre 0,05% et 10% en masse) et, en particulier, entre 5 g/l et 50 g/l de solution aqueuse (i.e. entre 0,5% et 5% en masse).

L'étape (a) du procédé selon la présente invention consiste à préparer une solution aqueuse contenant au moins un agent de dispersion et des nanotubes de carbone et ce, sans agitation mécanique. En effet, aucune technique permettant la dispersion de nanotubes de carbone et notamment toute technique mécanique comme un traitement aux ultrasons ou une agitation mécanique n'est utilisée lors de l'étape (a) du procédé selon la présente invention. De cette façon, les nanotubes de carbone ne subissent aucun traitement qui aurait pu conduire à en diminuer la taille ou à en affecter les propriétés.

Dans un mode de réalisation particulier, les nanotubes de carbone tels que précédemment définis sont utilisés verticalement alignés sous forme de tapis. Dans ce mode de réalisation, l'étape (a) consiste à immerger, sans agitation, des morceaux de tapis de nanotubes de carbone dans une solution aqueuse contenant au moins un agent de dispersion tels que précédemment définis.

L'étape (b) du procédé selon la présente invention consiste à congeler la solution aqueuse contenant au moins un agent de dispersion et les nanotubes de carbone par immersion dans l'azote liquide (T°= -196°C) puis à dégeler totalement la calotte glacée, ce cycle de congélation/décongélation pouvant être répété plusieurs fois.

Lors de cette phase de congélation i.e. phase d'immersion de la suspension dans l'azote liquide, au cours de laquelle la solution aqueuse située entre les nanotubes de carbone et notamment dans l'espace intertubes, typiquement compris entre 80 et 100 nm, du tapis de nanotubes de carbone se solidifie et, compte tenu des propriétés uniques d'expansion volumique de l'eau à basse température (expansion volumique de l'ordre de 10%), se dilate entraînant une augmentation de l'espace entre les nanotubes de carbone et notamment de l'espace intertubes et une diminution des interactions de Van der Waals assurant la cohésion entre les nanotubes de carbone et notamment entre les nanotubes de carbone alignés.

Lors de la phase de décongélation/dégel, l'écartement entre les nanotubes initié par la dilatation de l'eau au moment du gel, est vraisemblablement conservé suite à la présence de l'agent de dispersion dans le milieu. Par ailleurs, l'ensemble nanotubes de carbone /liquide, en passant de -196°C à une température positive, subit un choc thermique. On peut raisonnablement penser que, suite à ce choc thermique, des fractures se créent dans les canaux de glace provoquant ainsi la fragmentation des agglomérats de nanotubes de carbone. Ces deux facteurs, seuls ou en combinaisons facilitent la dispersion des nanotubes de carbone dans le milieu liquide.

Lors de la phase de congélation, la solution aqueuse contenant au moins un agent de dispersion et des nanotubes de carbone est mise dans tout type de flacon constitué d'un matériau résistant à -196°C (par exemple, polypropylène, polyéthylène, polytétrafluoroéthylène,...). Ainsi, un tel flacon peut être plongé entièrement dans l'azote liquide jusqu'à solidification complète du volume de solution, soit, par exemple, 2 min pour 50 ml d'une solution aqueuse contenant au moins un agent de dispersion et des nanotubes de carbone. Le niveau d'azote liquide doit être maintenu pour pallier à son évaporation.

En ce qui concerne la phase de décongélation, une fois le glaçon formé dans le flacon, ce dernier est rapidement plongé dans l'eau à température ambiante (i.e. 20°C ± 3°C) pendant 30 s (trempe thermique). Le retour complet à l'état liquide peut se faire soit en maintenant la solution à température ambiante pendant le temps nécessaire à la liquéfaction (environ 5 h pour 50 ml de solution); soit en portant l'ensemble dans une étuve chauffée entre 50°C et 100°C pour accélérer le processus (environ 1 h pour 50 ml de solution à 100°C).

Lors de l'étape (b) du procédé, le cycle de congélation/décongélation peut être répété plusieurs fois et ce, sans toutefois rendre prohibitive la durée totale du procédé. Le nombre de cycles nécessaires pour obtenir une pré-dispersion efficace varie légèrement en fonction de la longueur des nanotubes de carbone de départ et est de l'ordre de 5 à 100 cycles, notamment de l'ordre de 8 à 70 cycles et, en particulier, de 10 à 40 cycles.

En effet, l'étape (b) du procédé selon la présente invention peut être définie comme une étape de pré-dispersion. Toutefois, pour que cette étape de pré-dispersion soit la plus efficace possible, il convient que les phases de congélation/ décongélation soient mises en oeuvre sur des nanotubes de carbone bien infiltrés ou imprégnés i.e. bien mouillés par la solution aqueuse contenant au moins un agent de dispersion. En d'autres termes, il convient que la pénétration de la solution aqueuse contenant au moins un agent de dispersion entre les nanotubes de carbone soit la plus optimale possible. Pour ce faire, il peut être nécessaire d'éliminer les bulles de gaz (d'air) emprisonnées entre les nanotubes de carbone, notamment au sein du tapis de NTC et plus précisément le gaz piégé dans l'espace intertubes. A cet effet, plusieurs stratégies peuvent être envisagées.

Dans un premier mode de réalisation, la solution aqueuse contenant au moins un agent de dispersion et les nanotubes de carbone obtenue suite à l'étape (a) du procédé peut être soumise à un dégazage préalablement à l'étape (b) du procédé. Ce dégazage permet de chasser l'air emprisonné entre les nanotubes de carbone et notamment dans l'espace intertubes du tapis de nanotubes de carbone et permet à la solution aqueuse et au tensioactif de pénétrer entre les nanotubes et notamment dans l'espace intertubes. Pour cela, tout type de pompage peut être utilisé comme, par exemple, en plaçant la solution obtenue suite à l'étape (a) du procédé sous une cloche à vide avec un pompage primaire. La durée du pompage nécessaire correspond au temps pour faire disparaître la totalité des bulles d'air s'échappant des nanotubes de carbone et notamment des tapis de nanotubes de carbone dans la solution, à savoir, par exemple entre 30 et 60 min pour un volume de 50 ml.

Dans un second mode de réalisation, préalablement à l'étape (a) du procédé selon l'invention, les nanotubes de carbone et notamment les tapis de nanotubes de carbone sont pré-conditionnés en présence de vapeur d'eau ou par imprégnation avec un solvant protique tel que précédemment défini et notamment avec un solvant hydroxylé. En effet, le pré-conditionnement des nanotubes de carbone et notamment des tapis de nanotubes de carbone naturellement hydrophobes en présence de vapeur d'eau permet d'améliorer la pénétration d'une solution aqueuse entre les nanotubes. Cette étape optionnelle peut être réalisée en mettant en oeuvre un dispositif de pompage permettant de saturer l'atmosphère en vapeur d'eau. Il est également possible de pré-conditionner les tapis en les imprégnant d'un solvant hydroxylé i.e. un solvant alcoolique avant de les mettre dans la solution aqueuse contenant au moins un agent de dispersion.

Il est clair qu'aucune technique mécanique comme un traitement aux ultrasons ou une agitation mécanique n'est utilisée lors de l'étape (b) du procédé selon la présente invention.

L'étape (b) du procédé selon la présente invention permet de réduire considérablement la taille des agglomérats principaux de nanotubes de carbone tout en amorçant leur individualisation en vue de faciliter l'étape (c) du procédé qui consiste à soumettre les nanotubes de carbone à un traitement aux ultrasons. Ainsi, l'étape (c) du procédé selon la présente invention est la seule étape dudit procédé mettant en oeuvre une technique mécanique permettant la dispersion de nanotubes de carbone.

En particulier, on soumet les nanotubes de carbone présents dans la solution aqueuse contenant au moins un agent de dispersion à un traitement aux ultrasons avec un bac à ultrasons ou avec une sonde à ultrasons et ce pendant une durée comprise entre 5 min et 24 h et notamment entre 10 min et 12 h. A titre d'exemples, on peut utiliser un bac à ultrasons ou une sonde à ultrasons libérant une puissance comprise entre 200 W et 750 W et fonctionnant à une fréquence comprise entre 10 et 45 kHz. Par exemple, lors de l'étape (c) du procédé selon l'invention, on peut utiliser une sonde à ultrasons de type Bioblock vibracell libérant une puissance de 375 W et travaillant à une fréquence de 20 kHz.

Avantageusement, lorsqu'une sonde à ultrasons est utilisée lors de l'étape (c) du procédé selon l'invention, cette dernière peut être plongée jusqu'au milieu de la suspension i.e. la solution aqueuse contenant au moins un agent de dispersion et des nanotubes de carbone et cette solution peut être mise dans un bain d'eau refroidi à 0°C pour conserver une température proche de la température ambiante à l'intérieur de la suspension durant l'application des ultrasons.

L'étape (c) du procédé selon la présente invention permet d'achever la dispersion des nanotubes de carbone à l'aide d'ultrasons jusqu'à une individualisation totale des nanotubes dans la solution aqueuse. Par « individualisation totale », on entend, dans le cadre de l'invention, atteindre, dans la suspension, une concentration en nanotubes de carbone individuels constante. Celle-ci correspond à l'apparition d'un plateau sur la courbe reportant l'absorbance de la suspension en fonction de la durée du traitement aux ultrasons. Les agrégats sont considérés comme totalement individualisés pour une durée du traitement aux ultrasons incluse dans le plateau de la courbe d'absorbance et correspondant à l'absence d'agglomérats détectables à l'échelle de la microscopie optique.

La présente invention concerne également une suspension de nanotubes de carbone notamment susceptible d'être obtenue par le procédé de préparation selon la présente invention. Une suspension de nanotubes de carbone selon la présente invention est une suspension de nanotubes de carbone tels que précédemment définis notamment en ce qui concerne leur nature (SWNT, MWNT ou mélange), leur taille, la solution aqueuse et le tensioactif présent dans cette dernière.

Dans un mode de réalisation particulier, la suspension selon la présente invention comprend des nanotubes de carbone du type MWNT présents en une quantité comprise entre 5 g/l et 50 g/l de suspension et l'agent de dispersion présent dans cette suspension est un tensioactif non ionique.

Dans une telle suspension, les nanotubes de carbone du type MWNT sont longs i.e. des nanotubes de carbone du type MWNT présentant une longueur moyenne supérieure à 1 µm et notamment supérieure à 5 µm.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 présente différentes images de NTC avec une image macroscopique de tapis de NTC (Figure 1A), une image en microscopie électronique à balayage (MEB) à faible grossissement d'un tapis de NTC (Figure 1B) et une image MEB à fort grossissement de l'alignement des NTC dans le tapis (Figure 1C).
La Figure 2 présente une image MEB de tapis broyés (Figure 2A) et une image optique de tapis après 16 cycles d'immersion dans l'azote liquide (Figure 2B).
La Figure 3 présente l'évolution de l'absorbance en fonction de la durée d'ultrasons pour la méthode de dispersion selon l'invention « CRYO » et pour deux méthodes de dispersion de l'art antérieur « BR » et « US ».
La Figure 4 présente l'image par microscopie optique des suspensions de NTC dans eau + surfactant pour la technique « US » après 2h d'ultrasons (Figure 4A), pour la technique « BR » après 1h15 d'ultrasons (Figure 4B) et pour la technique « CRYO » après 1h d'ultrasons (Figure 4C).
La Figure 5 présente l'évolution de l'absorbance en fonction de la durée d'ultrasons pour différents tensioactifs utilisés dans le cadre du procédé de dispersion selon l'invention.
La Figure 6 présente l'image par microscopie optique de l'état de dispersion des suspensions de NTC dans l'eau avec différents tensioactifs.
La Figure 7 présente l'évolution de l'absorbance en fonction du temps pour des suspensions de NTC dans l'eau avec différents tensioactifs.
La Figure 8 présente l'évolution de l'absorbance en fonction de la durée d'ultrasons pour des suspensions comprenant différentes quantités de NTC.
La Figure 9 présente l'image par microscopie optique de deux suspensions comprenant 0.5% en masse de NTC après 45 min d'ultrasons (Figure 9A) et 1% en masse de NTC après deux heures d'ultrasons (Figure 9B).
La Figure 10 présente l'évolution de l'absorbance en fonction du nombre de cycles d'immersion dans l'azote liquide pour des suspensions comprenant des NTC alignés de différentes longueurs ou des NTC enchevêtrés.
La Figure 11 présente les images optiques des suspensions comprenant des NTC alignés de différentes longueurs ou des NTC enchevêtrés après 8 et 46 cycles d'immersion dans l'azote liquide.

### EXPOSÉ DÉTAILLÉ DE MODES DE RÉALISATION PARTICULIERS

### Remarques préalables.

Dans tous les exemples ci-après, les NTC utilisés sont synthétisés par CVD d'aérosol selon la méthode décrite par Castro *et al* **[9]** et se présentent sous la forme de tapis alignés, comme le montrent les Figures 1B et 1C. Par soucis de comparaison, des NTC enchevêtrés commerciaux ont également été utilisés pour l'exemple 4.

La suspension est caractérisée à chaque étape du procédé. Pour l'étape de pré-dispersion, la détermination du nombre de cycles optimum correspond à une réduction maximale de la taille des agglomérats. Ce nombre est évalué en suivant l'évolution macroscopique de la taille des agglomérats par microscopie optique (Olympus BX60) tous les deux cycles à partir d'une goutte de suspension. Une caractérisation par UV-visible (Jasco V-570) peut être réalisée pour suivre l'évolution de l'individualisation des NTC en fonction du nombre de cycles.

Concernant l'étape de dispersion par ultrasons, la durée nécessaire d'ultrasons pour avoir une suspension totalement dispersée est déterminée par microscopie optique (Olympus BX60) et UV-visible (Jasco V-570). La solution est dite totalement dispersée quand l'absorbance UV-visible (mesurée à λ=750 nm) de la suspension a atteint un maximum et que les observations par microscopie optique ne montrent plus la présence d'agglomérats.

La mesure de longueur des NTC peut se faire par trois techniques complémentaires que sont :
- la microscopie optique (Olympus BX60) ;
- la microscopie électronique à balayage (MEB-FEG Karl Zeiss Ultra55) et
- la microscopie électronique à transmission (MET Philips CM12).

En microscopie optique, une goutte de suspension, diluée d'un facteur allant de 200 à 400 fois, est séchée sur une lame de verre dans une étuve à 100°C avant observation. Pour le MEB, le dépôt d'une goutte de suspension pourra se faire par spin-coating sur un substrat de silicium ou bien par séchage d'une goutte, diluée d'un facteur allant de 200 à 400 fois, sur un substrat de silicium. Enfin pour le MET, une goutte de suspension diluée du même facteur qu'en MEB sera déposée sur une grille en cuivre recouverte d'une peau de carbone.

La stabilité dans le temps de la suspension est analysé par UV-visible. Des prélèvements quotidiens sont effectués durant 30 jours et l'évolution de l'absorbance (λ=750 nm) est suivie sur cette période.

### Exemple 1 : Comparaison entre la présente invention et deux autres procédés de dispersion.

Trois suspensions ont été réalisées : l'une à partir du procédé de la présente invention et les deux autres par des techniques couramment utilisées dans la littérature comme, par exemple, les ultrasons seuls (Yu *et al* **[10]**) ou avec un broyage à sec suivi d'une étape employant des ultrasons (Krause *et al* **[3]**) :
- Dispersion par une seule étape employant une sonde à ultrasons, ci-après désignée « US » ;
- Dispersion par broyage à sec dans un mortier puis par sonde à ultrasons, ci-après désignée « BR » ; et
- Dispersion par la voie décrite par la présente invention, ci-après désignée « CRYO ».

Les suspensions contiennent 0,5% en masse de NTC alignés dont la longueur moyenne initiale est de 500 µm et le diamètre externe moyen de 25 nm, 1% en masse de sel de bile dans 50 ml d'eau ultra pure (18,2 MΩ). Les morceaux bruts de tapis ont une taille allant de quelques mm à presque 1 cm (Figure 1A).

Après la phase de pré-dispersion, la largeur des morceaux est de l'ordre de 200 µm par broyage (Figure 2A) ainsi qu'après 16 cycles d'immersion dans l'azote liquide (Figure 2B). Cependant, malgré une taille identique, une différence peut être observée dans la morphologie des morceaux à l'issue de la dispersion « CRYO ». En effet, comme le montrent les flèches sur la Figure 2B, il n'y a pas seulement une réduction de la taille mais également un « éclatement » des tapis qui peut provenir des fractures perpendiculaires à l'alignement des tapis et ainsi repousser les tubes les uns des autres.

Les ultrasons sont ensuite appliqués pendant 2 h à l'aide d'une sonde bioblock Vibracell à une puissance de 375 W avec des prélèvements réguliers toutes les 15 min pour caractériser l'état de dispersion.

La Figure 3 représente l'évolution de l'absorbance en fonction de la durée d'ultrasons. Pour les trois procédés de dispersion, cette évolution est exponentielle. Cependant, pour la présente invention (courbe « CRYO »), l'asymptote, qui caractérise un état de dispersion total, est atteinte plus rapidement, soit après 1h d'ultrasons contre 1h15 et 2h respectivement pour les méthodes « BR » et « US ».

De plus, les valeurs d'absorbance maximale sont comparables entre chaque méthode, soit 0,982 pour « CRYO », 0,948 pour « BR » et 0,921 pour « US », ce qui montre un état de dispersion quasi-identique mais obtenu avec des durées d'ultrasons variables.

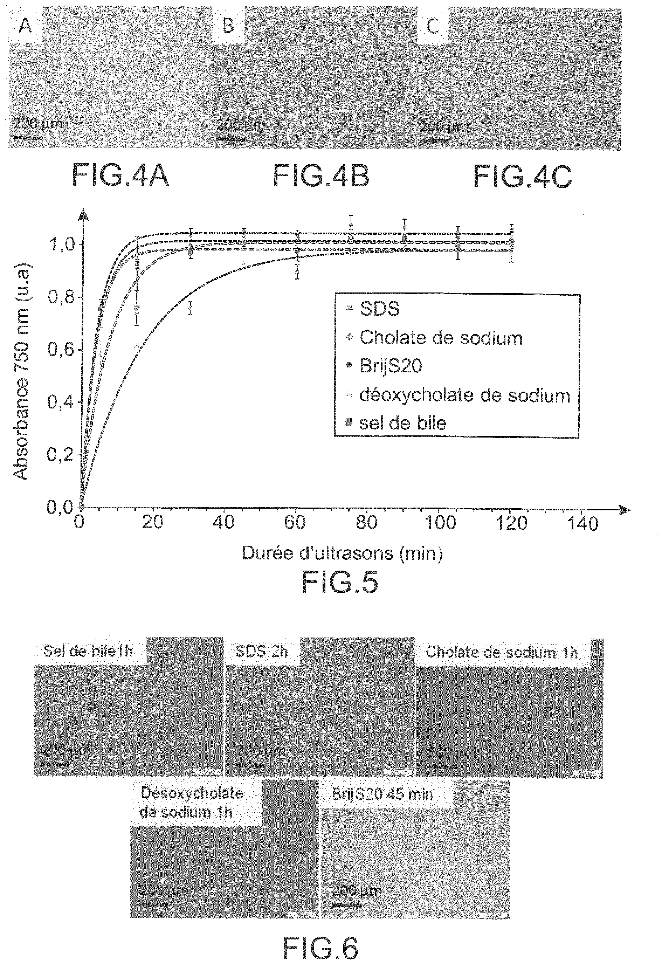

Les observations par microscopie optique (Figure 4) montrent un état de dispersion total (absence de gros agglomérats dont la taille est d'au moins une dizaine de microns) pour une durée d'ultrasons de 2h pour « US » (Figure 4A), de 1h15 pour « BR » (Figure 4B) et 1h pour « CRYO » (Figure 4C).

Les longueurs des tubes sont mesurées par microscopie optique et MEB, ce qui donne : - méthode « US » : 4,6 ± 2,2 µm ;
- méthode « BR » : 5,2 ± 2,7 µm ;
- méthode « CRYO » : 6,3 ± 3,5 µm.

La présente invention « CRYO » a permis d'augmenter la longueur moyenne des tubes de 20% par rapport à « BR » et de presque 40% par rapport à « US ».

Concernant la stabilité observée par spectrométrie, la suspension préparée avec la présente invention ne présente pas de sédimentation durant les 5 premières heures suivant sa dispersion.

### Exemple 2 : Influence du tensioactif.

La présente invention a été mise en oeuvre avec différents tensioactifs. Ces derniers sont : le dodécylsulfate de sodium (SDS), le sel de bile, le cholate de sodium, le désoxycholate de sodium et le Brij®S20.

Les suspensions contiennent toutes 0,5% en masse (5 mg/ml) de NTC, de longueur initiale 500 µm pour un diamètre externe moyen de 25 nm et 1% en poids de tensioactif dans l'eau ultra pure (18,2 MΩ). Chaque suspension a subi 16 cycles de gel/dégel dans l'azote liquide. Les ultrasons sont appliqués pendant 2 h suivant le même protocole que dans l'exemple 1 et les caractérisations sont également réalisées suivant ce même protocole.

La Figure 5 montre que l'évolution de l'absorbance n'est pas la même en fonction du tensioactif utilisé. En effet, avec le SDS, la durée pour atteindre l'asymptote est plus importante. Les valeurs d'absorbance maximale sont comparables, soit respectivement de 0,9820 ; 0,9822 ; 1,0144 ; 1,0107 et 1,0455 pour le SDS, sel de bile, cholate de sodium, désoxycholate de sodium et Brij®S20. Ainsi différentes durées d'ultrasons sont nécessaires pour arriver au même état de dispersion.

La Figure 6 montre que pour arriver à ce même état de dispersion, la durée d'ultrasons nécessaire passe de 2h avec le SDS à 45 min avec le Brij®S20. Concernant la longueur moyenne des nanotubes, le Tableau 1 regroupe l'ensemble des longueurs moyennes mesurées par MEB et microscopie optique pour chaque tensioactif employé, ainsi que les centiles à 10%, à 50% et à 90% (notés respectivement L₁₀, L₅₀, L₉₀).

**Tableau 1 : Longueur moyenne des NTC dans les différentes suspensions.**

| | **Durée US** | **Longueur moyenne** | **L₁₀** | **L₅₀** | **L₉₀** |
|---|---|---|---|---|---|
| Sel de bile | 1h | 6,3 ± 3,5 µm | 2,8 µm | 5,6 µm | 9,9 µm |
| SDS | 2h | 5,1 ± 3,0 µm | 1,8 µm | 3,5 µm | 10,1 µm |
| Cholate de sodium | 1h | 6,1 ± 3,2 µm | 2,8 µm | 5,6 µm | 10,2 µm |
| Désoxycholate de sodium | 1h | 6,7 ± 3,5 µm | 2,6 µm | 6,2 µm | 10,9 µm |
| Brij®S20 | 45 min | 6,7 ± 3,5 µm | 3,3 µm | 5,9 µm | 10,6 µm |

Les longueurs moyennes des NTC au sein des suspensions sont similaires, et supérieures à 6 µm pour tous les tensioactifs testés sauf le SDS pour lequel la longueur moyenne des NTC est de l'ordre de 5 µm. Par ailleurs, toutes les suspensions présentent, après ultrasons, une longueur des NTC équivalente (de l'ordre de 10,3 ± 0,6 µm) pour le centile 90.

Au regard de l'état de l'art sur la stabilité des suspensions qui, en général, ne prend en compte que l'aspect visuel de la suspension (considérée comme stable si la suspension reste « noire »), toutes les suspensions obtenues par le procédé selon la présente invention restent donc stables même au-delà de 11 mois.

Toutefois, il faut noter qu'une suspension « noire » visuellement peut néanmoins présenter une sédimentation mais celle-ci ne sera détectable que par spectroscopie UV-visible en suivant l'évolution de l'absorbance de la suspension dans le temps. En effet, la diminution de l'absorbance est directement liée à la formation du culot de sédimentation qui entraîne une diminution de la concentration de la suspension et donc, en vertu de la loi de Beer-Lambert, une diminution de l'intensité d'absorbance.

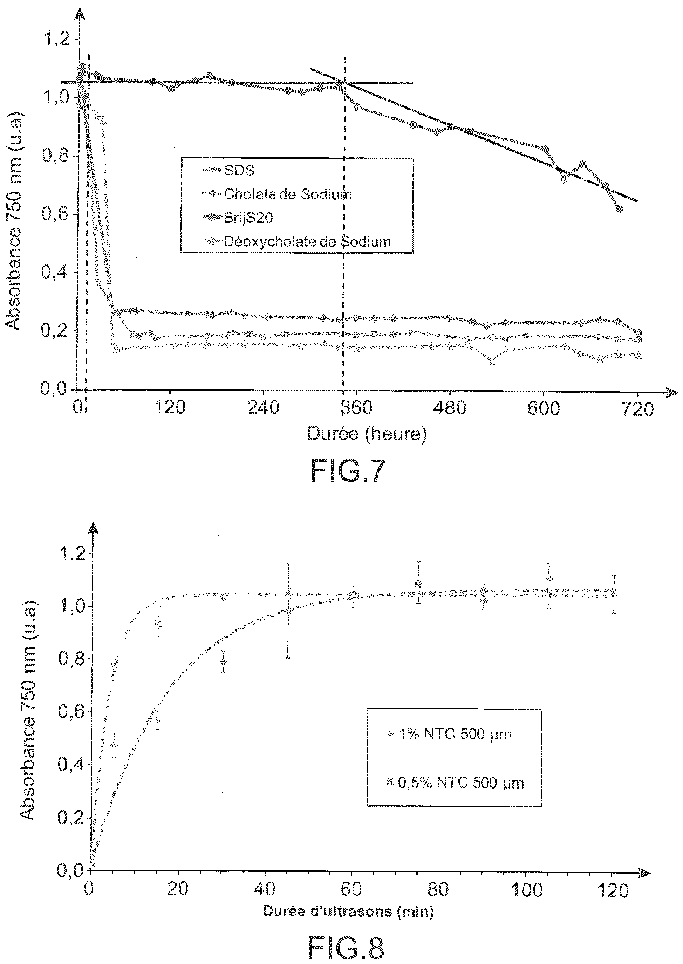

C'est pourquoi des prélèvements quotidiens de 10 µL de suspension à environ 1 cm de la surface, c'est-à-dire dans le surnageant, ont été réalisés et analysés par spectroscopie UV-visible. Les résultats sont reportés à la Figure 7. On peut ainsi constater que la suspension avec le Brij®S20 possède une très longue stabilité dans le temps de l'ordre de 15 jours avant qu'une sédimentation progressive n'apparaisse. Avec les autres tensioactifs, le phénomène de sédimentation apparaît rapidement (en moins de 24 h), le surnageant de la suspension (de ce fait moins concentré que la suspension initiale) restant ensuite stable sur une très longue période (>30 jours).

### Exemple 3 : Effet de la concentration en NTC.

Deux suspensions contenant soit 1% en masse, soit 0,5% en masse de NTC ont été dispersées suivant le procédé de la présente invention.

Les NTC, de longueur initiale 500 µm pour un diamètre externe moyen de 25 nm, sont mis en solution dans 50 ml d'eau ultra pure (18,2 MΩ) avec 1% en masse de Brij®S20 pour 0,5% en masse de NTC ou 1,2% en masse de Brij®S20 pour 1% en masse de NTC.

Les deux suspensions ont subi 16 cycles dans l'azote liquide avant d'être soumises aux ultrasons suivant le même protocole que dans les exemples 1 et 2. L'état de dispersion est caractérisé par UV-visible et microscopie optique suivant le même protocole que dans les exemples 1 et 2.

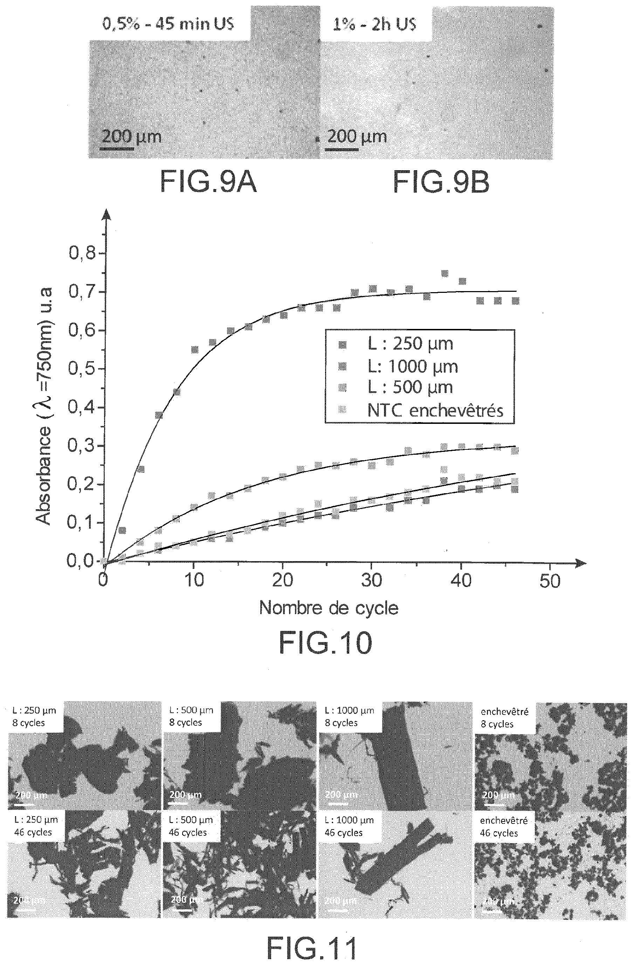

La Figure 8 montre une évolution moins rapide de l'absorbance pour une suspension à 1% en masse de NTC. Il faut à peine 20 min d'ultrasons avec 0,5% en masse de NTC pour atteindre le plateau contre 60 min minimum avec 1% en masse de NTC. Cependant, la disparition des agrégats est atteinte après 45 min et deux heures d'US pour la suspension de 0,5% en masse de NTC et de 1% en masse de NTC respectivement, comme le montrent clairement les photos par microscopie optique en Figure 9.

Les longueurs moyennes ainsi obtenues sont :
- 6,7 ± 3,5 µm avec 0,5% en masse de NTC ;
- 4,0 ± 1,7 µm avec 1% en masse de NTC.

Cet exemple montre qu'il est possible d'obtenir une suspension concentrée en NTC (1% en masse) et bien dispersée, tout en conservant une longueur moyenne supérieure à 1 µm (environ 4 µm).

### Exemple 4 : Effet de la longueur initiale des NTC alignés et de l'arrangement.

Dans cet exemple, trois suspensions ont été préparées avec différentes longueurs initiales de NTC alignés : 250, 500 et 1000 µm et une suspension avec des NTC enchevêtrés commerciaux. La concentration en NTC pour l'ensemble des suspensions est de 1% en masse et celle en tensioactif (Brij®S20) de 1,2% en masse. Des caractérisations par microscopie optique et UV-visible sont réalisées tous les deux cycles dans l'azote liquide.

Les analyses par UV-visible montrent une absorbance bien plus importante avec des NTC de 250 µm et un comportement quasi-identique entre des tubes de 1000 µm et enchevêtrés (Figure 10). De plus, il semblerait qu'un plateau soit atteint vers 40 cycles pour l'ensemble des suspensions. Concernant la taille des morceaux initiaux de tapis, une réduction est observée entre 8 et 46 cycles pour les suspensions avec des NTC de 250 et 500 µm (Figure 11). Par contre, pour des NTC de 1000 µm et des NTC enchevêtrés, la réduction de taille est beaucoup moins prononcée.

Cet exemple met en avant l'intérêt, pour mettre à profit tous les bénéfices de la phase de pré-dispersion par immersion dans l'azote liquide, d'utiliser des NTC alignés par rapport à des NTC enchevêtrés et préférentiellement avec des longueurs moyennes inférieures à 1000 µm.

### RÉFÉRENCES

**[1]** Hilding et al, 2003, « Dispersion of carbon nanotubes in liquids », Journal of dispersion science and technology, vol. 24, pages 1-41.
**[2]** Changyu et al, 2011, « Wet-grinding assisted ultrasonic dispersion of pristine multiwalled carbon nanotubes (MWCNTs) in chitosan solution », Colloids and Surfaces B: Biointerfaces, vol. 86, pages 189-197.
**[3]** Krause et al, 2011, « Influence of dry grinding in a ball mill on the length of multiwalled carbon nanotubes and their dispersion and percolation behaviour in melt mixed polycarbonate composites », Composites Science and Technology, vol. 71, pages 1145-1153.
**[4]** Demande internationale WO 2010/106287 au nom de Arkema, publiée le 23 septembre 2010.
**[5]** Demande de brevet US 2010/0330358 au nom de Meijo Nano Carbon Co., Ltd. publiée le 30 décembre 2010.
**[6]** Demande internationale WO 2009/063008 aux noms de Stichting Dutch Polymer Institute et Massachusetts Institute of Technology, publiée le 22 mai 2009.
**[7]** Brevet US 8,324,487 aux noms de Tongde Shen et Jing Li, délivré le 4 décembre 2012.
**[8]** Xu et al, 2011, « A two-step shearing strategy to disperse long carbon nanotubes from vertically aligned multiwalled carbon nanotube arrays for transparent conductive films », Langmuir, vol. 26, pages 2798-2804.
**[9]** Castro et al, 2013, « The role of hydrogen in the aerosol-assisted chemical vapor déposition process in producing thin and densely packed vertically aligned carbon nanotubes », Carbon, vol. 61, pages 585-594.
**[10]** Yu et al, 2007, « Controlling the dispersion of multi-wall carbon nanotubes in aqueous surfactant solution », Carbon, vol. 45, pages 618-623.

## Revendications

1. Procédé de préparation d'une suspension de nanotubes de carbone dans une solution aqueuse comprenant les étapes successives suivantes consistant à :
a) mettre en contact, sans agitation mécanique et sans traitement aux ultrasons, des nanotubes de carbone avec une solution aqueuse contenant au moins un agent de dispersion ;
b) soumettre, sans agitation mécanique et sans traitement aux ultrasons, la solution aqueuse contenant des nanotubes de carbone et un agent de dispersion obtenue suite à l'étape (a) à au moins un cycle de congélation dans l'azote liquide et de décongélation ;
c) soumettre la solution décongelée obtenue suite à l'étape (b) à un traitement aux ultrasons.

2. Procédé selon la revendication 1, **caractérisé en ce que** ladite solution aqueuse contient, en tant que solvant, de l'eau et éventuellement un autre solvant protique.

3. Procédé selon la revendication 1 ou 2, **caractérisé en ce que** ledit agent de dispersion est choisi dans le groupe constitué par les polymères dispersants et les tensioactifs.

4. Procédé selon la revendication 3, **caractérisé en ce que** les tensioactifs sont choisis parmi les tensioactifs non ioniques et les tensioactifs anioniques,

5. Procédé selon l'une quelconque des revendications 1 à 4, **caractérisé en ce que** la concentration en agent de dispersion est comprise entre 1g/l et 100 g/l de solution aqueuse (i.e. entre 0,1% et 10% en masse) et notamment entre 2 g/l et 50 g/l de solution aqueuse (i.e. entre 0,2% et 5% en masse).

6. Procédé selon l'une quelconque des revendications 1 à 5, **caractérisé en ce que** lesdits nanotubes de carbone sont des nanotubes de carbone à plusieurs couches de graphène présentant une longueur moyenne comprise entre 10 nm et 10000 µm, notamment entre 20 nm et 8000 µm, en particulier entre 50 nm et 6000 µm et, tout particulièrement, entre 100 nm et 5000 µm.

7. Procédé selon l'une quelconque des revendications 1 à 6, **caractérisé en ce que** lesdits nanotubes de carbone sont des nanotubes de carbone à plusieurs couches de graphène, ayant des diamètres externes moyens compris entre 5 et 100 nm et des longueurs moyennes comprises entre 10 et 10000 µm, notamment entre 40 et 9000 µm, en particulier, entre 60 et 8000 µm et, plus particulièrement, entre 100 et 1000 µm, lesdits nanotubes étant avantageusement alignés.

8. Procédé selon l'une quelconque des revendications 1 à 7, **caractérisé en ce que** lesdits nanotubes de carbone sont présents, dans la solution aqueuse, en une quantité comprise entre 0,1 g/l et 200 g/l de solution aqueuse (i.e. entre 0,01% et 20% en masse), notamment entre 0,5 g/l et 100 g/l de solution aqueuse (i.e. entre 0,05% et 10% en masse) et, en particulier, entre 5 g/l et 50 g/l de solution aqueuse (i.e. entre 0,5% et 5% en masse).

9. Procédé selon l'une quelconque des revendications 1 à 8, **caractérisé en ce que** ladite étape (b) du procédé présente de l'ordre de 5 à 100 cycles de congélation/décongélation, notamment de l'ordre de 8 à 70 cycles de congélation/décongélation et, en particulier, de 10 à 40 cycles de congélation/décongélation.

10. Procédé selon l'une quelconque des revendications 1 à 9, **caractérisé en ce que** ladite solution aqueuse contenant au moins un agent de dispersion et les nanotubes de carbone obtenue suite à ladite étape (a) est soumise à un dégazage préalablement à ladite étape (b).

11. Procédé selon l'une quelconque des revendications 1 à 9, **caractérisé en ce que**, préalablement à ladite étape (a), les nanotubes de carbone sont pré-conditionnés en présence de vapeur d'eau ou par imprégnation avec un solvant protique.

12. Procédé selon l'une quelconque des revendications 1 à 11, **caractérisé en ce que**, lors de ladite étape (c), les nanotubes de carbone présents dans la solution aqueuse contenant au moins un agent de dispersion sont soumis à un traitement aux ultrasons avec un bac à ultrasons ou avec une sonde à ultrasons et ce pendant une durée comprise entre 5 min et 24 h et notamment entre 10 min et 12 h.

13. Suspension de nanotubes de carbone susceptible d'être obtenue par un procédé de préparation selon l'une quelconque des revendications 1 à 12, **caractérisée en ce qu'**elle comprend des nanotubes de carbone du type MWNT présents en une quantité comprise entre 5 g/l et 50 g/l de suspension, **en ce que** l'agent de dispersion présent dans cette suspension est un tensioactif non ionique **et en ce que le solvant de la suspension n'est constitué que d'eau.**

14. Suspension selon la revendication 13, **caractérisée en ce que** lesdits nanotubes de carbone du type MWNT présentent une longueur moyenne supérieure à 1 µm et notamment supérieure à 5 µm.

## Patentansprüche

1. Verfahren zum Herstellen einer Suspension aus Kohlenstoff-Nanoröhrchen in einer wässrigen Lösung, umfassend die nachstehenden, aufeinanderfolgenden Schritte:
a) Inkontaktbringen der Kohlenstoff-Nanoröhrchen mit einer zumindest ein Dispergiermittel enthaltenden wässrigen Lösung, und zwar ohne mechanisches Rühren und ohne Ultraschallbehandlung;
b) Unterziehen der in Schritt (a) erhaltenen, Kohlenstoff-Nanoröhrchen und ein Dispergiermittel enthaltenden Lösung zumindest einem Zyklus aus Gefrieren in flüssigem Stickstoff und Auftauen;
c) Unterziehen der in Schritt (b) erhaltenen aufgetauten Lösung einer Ultraschallbehandlung.

2. Verfahren nach Anspruch 1, **dadurch gekennzeichnet, dass** die wässrige Lösung als Lösungsmittel Wasser und gegebenenfalls ein weiteres, protisches Lösungsmittel enthält.

3. Verfahren nach Anspruch 1 oder 2, **dadurch gekennzeichnet, dass** das Dispergiermittel ausgewählt ist aus der Gruppe bestehend aus dispergierenden Polymeren und aus Tensiden.

4. Verfahren nach Anspruch 3, **dadurch gekennzeichnet, dass** die Tenside ausgewählt sind aus nichtionischen Tensiden und anionischen Tensiden.

5. Verfahren nach einem der Ansprüche 1 bis 4, **dadurch gekennzeichnet, dass** die Konzentration an Dispergiermittel zwischen 1 g/l und 100 g/l wässriger Lösung (d. h. zwischen 0,1 Masse-% und 10 Masse-%) und insbesondere zwischen 2 g/l und 50 g/l wässriger Lösung (d. h. zwischen 0,2 Masse-% und 5 Masse-%) beträgt.

6. Verfahren nach einem der Ansprüche 1 bis 5, **dadurch gekennzeichnet, dass** die Kohlenstoff-Nanoröhrchen Kohlenstoff-Nanoröhrchen mit mehreren Graphen-Schichten sind, die eine mittlere Länge zwischen 10 nm und 10000 µm, insbesondere zwischen 20 nm und 8000 µm, insbesondere zwischen 50 nm und 6000 µm und ganz besonders zwischen 100 nm und 5000 µm haben.

7. Verfahren nach einem der Ansprüche 1 bis 6, **dadurch gekennzeichnet, dass** die Kohlenstoff-Nanoröhrchen Kohlenstoff-Nanoröhrchen mit mehreren Graphen-Schichten sind, die mittlere Außendurchmesser zwischen 5 und 100 nm und mittlere Längen zwischen 10 und 10000 µm, insbesondere zwischen 40 und 9000 µm, insbesondere zwischen 60 und 8000 µm und ganz besonders zwischen 100 und 1000 µm haben, wobei die Nanoröhrchen vorteilhaft fluchtend ausgerichtet sind.

8. Verfahren nach einem der Ansprüche 1 bis 7, **dadurch gekennzeichnet, dass** die Kohlenstoff-Nanoröhrchen in der wässrigen Lösung in einer Menge zwischen 0,1 g/l und 200 g/l wässriger Lösung (d. h. zwischen 0,01 Masse-% und 20 Masse-%), insbesondere zwischen 0,5 g/l und 100 g/l wässriger Lösung (d. h. zwischen 0,05 Masse-% und 10 Masse-%) und insbesondere zwischen 5 g/l und 50 g/l wässriger Lösung (d. h. zwischen 0,5 Masse-% und 5 Masse-%) vorhanden sind.

9. Verfahren nach einem der Ansprüche 1 bis 8, **dadurch gekennzeichnet, dass** der Verfahrensschritt (b) etwa 5 bis 100 Gefrier-/Auftau-Zyklen, insbesondere etwa 8 bis 70 Gefrier-/Auftau-Zyklen und ganz besonders etwa 10 bis 40 Gefrier-/Auftau-Zyklen umfasst.

10. Verfahren nach einem der Ansprüche 1 bis 9, **dadurch gekennzeichnet, dass** die zumindest ein Dispergiermittel und die Kohlenstoff-Nanoröhrchen enthaltende wässrige Lösung, die in Schritt (a) erhalten wurde, einer vor dem Schritt (b) erfolgenden Entgasung unterzogen wird.

11. Verfahren nach einem der Ansprüche 1 bis 9, **dadurch gekennzeichnet, dass** vor dem Schritt (a) die Kohlenstoff-Nanoröhrchen unter Vorhandensein von Wasserdampf oder durch Imprägnieren mit einem protischen Lösungsmittel vorbehandelt werden.

12. Verfahren nach einem der Ansprüche 1 bis 11, **dadurch gekennzeichnet, dass** bei dem Schritt (c) die Kohlenstoff-Nanoröhrchen, die in der zumindest ein Dispergiermittel enthaltenden wässrigen Lösung vorhanden sind, einer Ultraschallbehandlung mit einem Ultraschallbehälter oder einer Ultraschallsonde unterzogen werden, und zwar für eine Zeitdauer zwischen 5 Minuten und 24 Stunden und insbesondere zwischen 10 Minuten und 12 Stunden.

13. Suspension aus Kohlenstoff-Nanoröhrchen, die mit einem Herstellungsverfahren nach einem der Ansprüche 1 bis 12 erhalten werden kann, **dadurch gekennzeichnet, dass** sie Kohlenstoff-Nanoröhrchen vom Typ MWNT enthält, die in einer Menge zwischen 5 g/l und 50 g/l Suspension vorliegen, dass das in dieser Suspension vorhandene Dispergiermittel ein nichtionisches Tensid ist und dass das Lösungsmittel der Suspension nur aus Wasser besteht.

14. Suspension nach Anspruch 13, **dadurch gekennzeichnet, dass** die Kohlenstoff-Nanoröhrchen vom Typ MWNT eine mittlere Länge von über 1 µm und insbesondere über 5 µm aufweisen.

## Claims

1. A method for preparing a suspension of carbon nanotubes in an aqueous solution comprising the following successive steps consisting in:
a) contacting, without mechanical stirring and without ultrasound treatment, carbon nanotubes with an aqueous solution containing at least one dispersing agent;
b) subjecting, without mechanical stirring and without ultrasound treatment, the aqueous solution containing carbon nanotubes and a dispersing agent obtained following step (a) to at least one cycle of freezing in liquid nitrogen and thawing;
c) subjecting the thawed solution obtained following step (b) to an ultrasound treatment.

2. The method according to claim 1, **characterized in that** said aqueous solution contains, as a solvent, water and possibly another protic solvent.

3. The method according to claim 1 or 2, **characterized in that** said dispersing agent is selected from the group consisting of dispersing polymers and surfactants.

4. The method according to claim 3, **characterized in that** the surfactants are selected from non ionic surfactants and anionic surfactants.

5. The method according to any of claims 1 to 4, **characterized in that** the dispersing agent concentration is between 1 g/l and 100 g/l of aqueous solution (i.e. between 0.1% and 10% by mass) and in particular between 2 g/l and 50 g/l of aqueous solution (i.e. between 0.2% and 5% by mass).

6. The method according to any of claims 1 to 5, **characterized in that** said carbon nanotubes are carbon nanotubes with several graphene layers having a mean length between 10 nm and 10 000 µm, notably between 20 nm and 8 000 µm, in particular between 50 nm and 6 000 µm and, most particularly between 100 nm and 5 000 µm.

7. The method according to any of claims 1 to 6, **characterized in that** said carbon nanotubes are carbon nanotubes with several graphene layers, having mean external diameters between 5 and 100 nm and mean lengths between 10 and 10 000 µm, notably between 40 and 9 000 µm, in particular between 60 and 8 000 µm and, more particularly between 100 and 1000 µm, said nanotubes being advantageously aligned.

8. The method according to any of claims 1 to 7, **characterized in that** said carbon nanotubes are present, in the aqueous solution, in an amount between 0.1 g/l and 200 g/l of aqueous solution (i.e. between 0.01% and 20% by mass), notably between 0.5 g/l and 100 g/l of aqueous solution (i.e. between 0.05% and 10% by mass) and, in particular between 5 g/l and 50 g/l of aqueous solution (i.e. between 0.5% and 5% by mass).

9. The method according to any of claims 1 to 8, **characterized in that** said step (b) of the method has in the order of 5 to 100 freezing/thawing cycles, notably in the order of 8 to 70 freezing/thawing cycles and, in particular from 10 to 40 freezing/thawing cycles.

10. The method according to any of claims 1 to 9, **characterized in that** said aqueous solution containing at least one dispersing agent and the carbon nanotubes obtained following step (a) is subjected to a degassing prior to said step (b).

11. The method according to any of claims 1 to 9, **characterized in that**, prior to said step (a), the carbon nanotubes are preconditionned in the presence of water vapour or by impregnation with a protic solvent.

12. The method according to any of claims 1 to 11, **characterized in that**, during said step (c), the carbon nanotubes present in the aqueous solution containing at least one dispersing agent are subjected to an ultrasound treatment with an ultrasonic bath or with an ultrasonic probe for a duration between 5 min and 24 h and in particular between 10 min and 12 h.

13. A suspension of carbon nanotubes likely to be obtained by a preparing method according to any of claims 1 to 12, **characterized in that** it comprises MWNT type carbon nanotubes present in an amount between 5 g/l and 50 g/l of suspension, **in that** the dispersing agent present in this suspension is a non ionic surfactant and **in that** the solvent of the suspension is only constituted of water.

14. The suspension according to claim 13, **characterized in that** said MWNT type carbon nanotubes have a mean length higher than 1 µm and in particular higher than 5 µm.
